(19) Europäisches Patentamt
European Patent Office
Office européen des brevets

(11) **EP 4 668 402 A1**

(12) # EUROPEAN PATENT APPLICATION
published in accordance with Art. 153(4) EPC

(43) Date of publication:
**24.12.2025 Bulletin 2025/52**

(21) Application number: **24755820.8**

(22) Date of filing: **02.01.2024**

(51) International Patent Classification (IPC):
***H01M 10/0567*** *(2010.01)* ***H01M 10/0569*** *(2010.01)*
***H01M 10/0525*** *(2010.01)* ***H01M 10/42*** *(2006.01)*

(52) Cooperative Patent Classification (CPC):
**H01M 10/0525; H01M 10/0567; H01M 10/0569; H01M 10/42;** Y02E 60/10

(86) International application number:
**PCT/CN2024/070165**

(87) International publication number:
**WO 2024/169444 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.02.2023 CN 202310106054**

(71) Applicant: **Zhuhai CosMX Battery Co., Ltd.**
**Zhuhai, Guangdong 519180 (CN)**

(72) Inventors:
- **WANG, Hai**
  **Zhuhai, Guangdong 519180 (CN)**
- **LI, Suli**
  **Zhuhai, Guangdong 519180 (CN)**
- **LI, Junyi**
  **Zhuhai, Guangdong 519180 (CN)**

(74) Representative: **Murgitroyd & Company**
**165-169 Scotland Street**
**Glasgow G5 8PL (GB)**

(54) ## ELECTROLYTE AND BATTERY

(57) The present disclosure relates to the technical field of batteries, in particlular to an eclectroyte and a battery comprising the electrolyte. The electrolyte comprises a first additive having a structure as represented by formula (I) and a second additive having a structure represented by formula (II), where $R_1$, $R_2$, and $R_3$ are each independently selected from formula (a), formula (b), formula (c), and formula (d); $R_4$, $R_5$, and $R_6$ are each independently selected from C1-C10 alkyl, C2-C10 alkenyl, and C1-C10 alkoxy; X is selected from hydrogen, halogen, C1-C10 alkyl, C2-C10 alkenyl, C2-C10 alkynyl, C1-C4 cyano; and n is 1, 2, 3, or 4. A SEI film formed by the electrolyte of the present disclosure can improve the stability and the ionic conductivity of an interface film, and has higher safety. The battery of the present disclosure has higher safety performance and more stable long cycle performance.

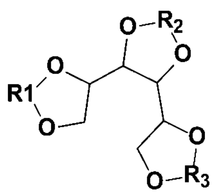
(I), and
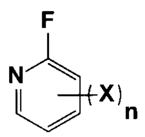
(II).

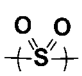 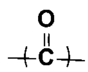 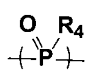 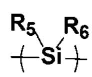

EP 4 668 402 A1

Processed by Luminess, 75001 PARIS (FR)

## Description

### TECHNICAL FIELD

The present disclosure relates to the field of battery technologies, and specifically, to an electrolyte solution and a battery including the electrolyte solution.

### BACKGROUND

Lithium-ion batteries have become one of the focuses in the new energy market due to their advantages such as high working voltage, long cycle life, low self-discharge rate, environmental friendliness, and no memory effect, and dominate fields such as 3C digital products, power tools, and energy storage. With the continuous increase in market demand, a higher energy density requirement is imposed on the lithium-ion batteries, and demands for a charging rate and capacity are increasing. Thus, safety performance of the lithium-ion batteries currently has become one of the focuses.

Most existing lithium battery technologies use a carbonate-based organic solvent system, which has a low flash point and is flammable. These problems easily cause a failure during safety tests such as thermal shock and overcharge/discharge, resulting in unsafe behaviors such as fire and burning. To eliminate such potential safety hazards, researchers of lithium-ion batteries have developed flame-retardant additives to improve thermal shock performance. However, all corresponding additives currently on the market cause defects such as increased system impedance, deteriorated fast-charging performance, and reduced cycle life.

Therefore, it is very important to invent a battery with higher safety performance, lower impedance, and more stable long-time cycling performance.

### SUMMARY

The objective of the present disclosure is to overcome the problems existing in a conventional technology by providing an electrolyte solution and a battery including the electrolyte solution. The electrolyte solution of the present disclosure can form an SEI film with a "hamburger-like" layered structure. This SEI film can inhibit an interface side reaction, improve stability and ionic conductivity of the interface film, reduce an increase in interface film impedance, and easily generate a polymer that can cover an active material and a short-circuit point under a thermal shock condition. The battery prepared by using the electrolyte solution of the present disclosure has low impedance, high structure stability and thermal stability in a negative electrode interface, and higher safety performance and more stable long-time cycling performance.

It is found that impedance of a battery can be reduced, and safety performance and long-time cycling stability of the battery can be improved by improving structural stability, thermal stability, and ionic conductivity of the interface film.

Through further in-depth research, it is found that in order to improve the structural stability, thermal stability, and ionic conductivity of the interface film, a specific composition may be added to the electrolyte solution to inhibit an interface side reaction and form an interface film with higher stability and ionic conductivity. After extensive in-depth research, it has screened out a specific composition that can form an interface film with higher stability and higher ionic conductivity.

To achieve the foregoing objective, a first aspect of the present disclosure provides an electrolyte solution, which includes a first additive having a structure represented by formula (I) and a second additive having a structure represented by formula (II):

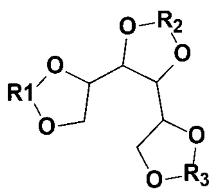 (I), and 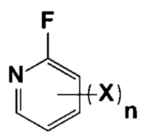 (II).

Herein $R_1$, $R_2$, and $R_3$ each are independently selected from

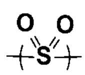, 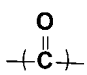, 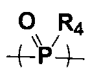,

or

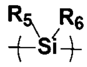 ;

and $R_4$, $R_5$, and $R_6$ each are independently selected from a substituted or unsubstituted C1-C10 alkyl group, a substituted or unsubstituted C2-C10 alkenyl group, or a substituted or unsubstituted C1-C10 alkoxy group.

X is selected from hydrogen, halogen, a substituted or unsubstituted C1-C10 alkyl group, a substituted or unsubstituted C2-C10 alkenyl group, a substituted or unsubstituted C2-C10 alkynyl group, or a C1-C4 cyano group, and n is 1, 2, 3, or 4.

The substituent is selected from one or more of F, Cl, Br, or I.

A second aspect of the present disclosure provides a battery, and an electrolyte solution used for the battery is the electrolyte solution according to the first aspect of the present disclosure.

Based on the foregoing technical solutions, the present disclosure has at least the following advantages compared with the conventional technology:

(1) the electrolyte solution of the present disclosure has high stability;
(2) the electrolyte solution of the present disclosure can form a "hamburger-like" layered SEI film, which can inhibit a side reaction of an interface film, improve thermal stability and ionic conductivity of a negative electrode interface film, and reduce an increase in impedance of the interface film;
(3) the electrolyte solution of the present disclosure is prone to generate a polymer that can cover an active material and a short-circuit point under a thermal shock condition, ensuring high safety performance;
(4) the battery of the present disclosure has low impedance;
(5) the battery of the present disclosure has high long-time cycling stability; and
(6) the battery of the present disclosure has high safety performance.

Other features and advantages of the present disclosure will be detailed in the following specific embodiments.

## DETAILED DESCRIPTION OF THE EMBODIMENTS

Specific implementations of the present disclosure are described below in detail. It should be understood that the specific implementations described herein are merely used for the purposes of illustrating and explaining the present disclosure, rather than limiting the present disclosure.

A first aspect of the present disclosure provides an electrolyte solution, which includes a first additive having a structure represented by formula (I) and a second additive having a structure represented by formula (II):

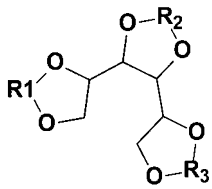 (I), and 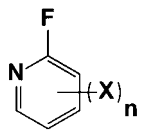 (II).

Herein $R_1$, $R_2$, and $R_3$ each are independently selected from

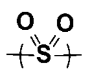, 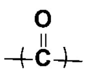, 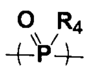,

or

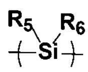 ;

and $R_4$, $R_5$, and $R_6$ each are independently selected from a substituted or unsubstituted C1-C10 alkyl group, a substituted or unsubstituted C2-C10 alkenyl group, or a substituted or unsubstituted C1-C10 alkoxy group.

X is selected from hydrogen, halogen, a substituted or unsubstituted C1-C10 alkyl group, a substituted or unsubstituted C2-C10 alkenyl group, a substituted or unsubstituted C2-C10 alkynyl group, and a C1-C4 cyano group, and

n is 1, 2, 3, or 4.

The substituent is selected from one or more of F, Cl, Br, or I.

It is found that when both the first additive and the second additive are present in the electrolyte solution, the first additive has low reduction resistance, during formation of a battery, the first additive is more prone to form an interface film (SEI film) compared to a carbonate organic solvent, and the formed interface film can inhibit an interface side reaction to some extent, ensuring high stability; and the second additive has a low reduction potential and can generate an inorganic SEI film rich in lithium fluoride on the basis of the original interface film when the potential drops to the reduction potential, thereby forming a "hamburger-like" layered SEI film. The multi-layer SEI film has higher stability, and also has a more stable macromolecular structure and larger ionic transfer pores due to its rich porous macromolecular structure. This is beneficial for lithium ion transfer, and can improve ionic conductivity of the interface film, balance dynamic degradation caused by the multi-layer SEI film, and reduce an increase in interface impedance, thereby improving long-time cycling stability and safety performance of the battery. In addition, in a thermal shock condition, the second additive includes a pyridine structure, and thus is easily catalyzed by high temperature to undergo a polymerization reaction, generating a polymer that can cover an active material and a short circuit point. Moreover, the polymerization process can also absorb heat, further enhancing the safety performance of the battery. Based on a synergistic effect of the first additive and the second additive, a stable low-impedance macromolecular interface film is generated, which stabilizes the interface while providing ionic transfer pores, thereby inhibiting the growth of interface impedance. In addition, in the thermal shock condition, the first additive and the second additive can polymerize to form an interface film to prevent a short circuit, thereby improving cycling performance and thermal shock performance.

After the foregoing specific composition is added to the electrolyte solution, the electrolyte solution has been able to achieve lower impedance, more stable long-time cycling performance, and higher safety performance compared with an electrolyte solution in a conventional technology. To further enhance the effect, one or more of the technical features may be further optimized.

Herein $R_1$, $R_2$, and $R_3$ each are independently selected from

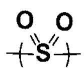, 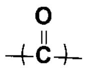, 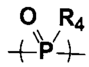,

or

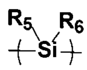;

and $R_4$, $R_5$, and $R_6$ each are independently selected from a substituted or unsubstituted C1-C10 alkyl group, a substituted or unsubstituted C2-C10 alkenyl group, or a substituted or unsubstituted C1-C10 alkoxy group. The substituent is selected from one or more of F, Cl, Br, or I.

$R_1$, $R_2$, and $R_3$ may be the same or may be different from each other, and $R_1$, $R_2$, and $R_3$ each are independently selected from

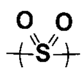, 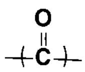, 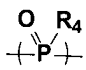, or 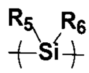.

In an example, at least one of $R_1$, $R_2$, or $R_3$ (for example, 1, 2, or 3 of them) is selected from

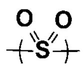.

$R_4$, $R_5$, and $R_6$ may be the same or may be different from each other, and $R_4$, $R_5$, and $R_6$ each are independently selected from the substituted or unsubstituted C1-C10 alkyl group, the substituted or unsubstituted C2-C10 alkenyl group, or the substituted or unsubstituted C1-C10 alkoxy group.

In the present disclosure, for meaning of "substituted or unsubstituted", the "substituted or unsubstituted C1-C10 alkyl group" is used as an example, which means that H on the alkyl group may be substituted or not substituted by any substituent. When the alkyl group is substituted by F, one H on the alkyl group may be substituted by F, or a plurality of Hs may be substituted by F, or all Hs may be substituted by F.

The C1-C10 alkyl group is, for example, selected from methyl, ethyl, n-propyl, isopropyl, cyclopropyl, n-butyl,

isobutyl, sec-butyl, tert-butyl, cyclobutyl, n-pentyl, isopentyl, tert-pentyl, neopentyl, cyclopentyl, 2,2-dimethylpropyl, 1-ethylpropyl, 1-methylbutyl, 2-methylbutyl, n-hexyl, isohexyl, 2-hexyl, 3-hexyl, cyclohexyl, 2-methylpentyl, 3-methylpentyl, 1,1,2-trimethylpropyl, 3,3-dimethylbutyl, n-heptyl, 2-heptyl, 3-heptyl, 2-methylhexyl, 3-methylhexyl, 4-methylhexyl, isoheptyl, cycloheptyl, n-octyl, cyclooctyl, nonyl, or decyl.

The C2-C10 alkenyl group is, for example, selected from vinyl, propenyl, 2-propenyl, n-butenyl, isobutenyl, sec-butenyl, tert-butenyl, cyclobutenyl, n-pentenyl, isopentenyl, tert-pentenyl, neopentenyl, cyclopentenyl, 2,2-dimethylpropenyl, 1-ethylpropenyl, 1-methylbutenyl, 2-methylbutenyl, n-hexenyl, isohexenyl, 2-hexenyl, 3-hexenyl, 2-methylpentenyl, 3-methylpentenyl, 1,1,2-trimethylpropenyl, 3,3-dimethylbutenyl, n-heptenyl, 2-heptenyl, 3-heptenyl, 2-methylhexenyl, 3-methylhexenyl, 4-methylhexenyl, isoheptenyl, cycloheptenyl, n-octenyl, cyclooctenyl, nonenyl, or decenyl.

The C1-C10 alkoxy group is, for example, selected from methoxy, ethoxy, n-propoxy, isopropoxy, cyclopropoxy, n-butoxy, isobutoxy, sec-butoxy, tert-butoxy, cyclobutoxy, n-pentyloxy, isopentyloxy, tert-pentyloxy, neopentyloxy, cyclopentyloxy, 2,2-dimethylpropoxy, 1-ethylpropoxy, 1-methylbutoxy, 2-methylbutoxy, n-hexoxy, isohexyloxy, 2-hexoxy, 3-hexoxy, cyclohexyloxy, 2-methylpentyloxy, 3-methylpentyloxy, 1,1,2-trimethylpropoxy, 3,3-dimethylbutoxy, n-heptyloxy, 2-heptyloxy, 3-heptyloxy, 2-methylhexyloxy, 3-methylhexyloxy, 4-methylhexyloxy, isoheptyloxy, cycloheptyloxy, n-octyloxy, cyclooctyloxy, nonoxy, or decyloxy.

According to a specific implementation, $R_1$, $R_2$, and $R_3$ each are independently selected from

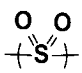, 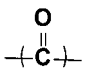, 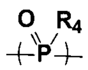, or 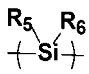,

and $R_4$, $R_5$, and $R_6$ each are independently selected from a substituted or unsubstituted C1-C5 alkyl group, a substituted or unsubstituted C2-C5 alkenyl group, or a substituted or unsubstituted C1-C5 alkoxy group, and the substituent is selected from F.

In one example, the first additive includes one or more of the following structures:

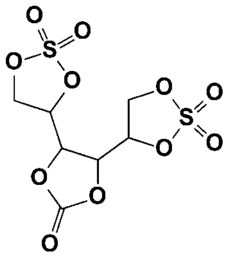 (I-1), 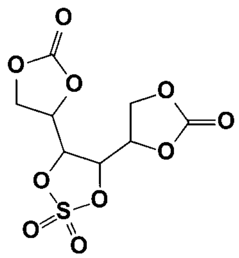 (I-2), 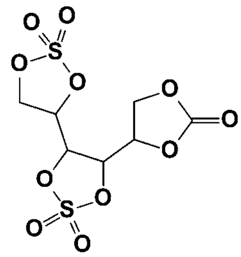 (I-3),

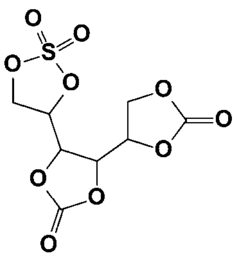 (I-4), 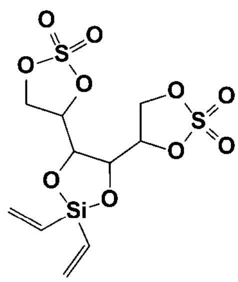 (I-5), 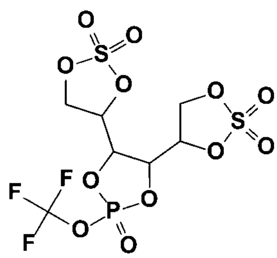 (I-6).

In the structure shown in formula (II), X may be located at any of the four carbon positions that can be substituted in the six-membered heterocycle, for example, when n = 1,

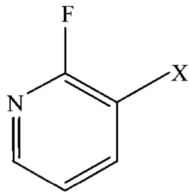 , 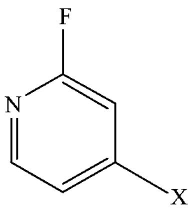 , 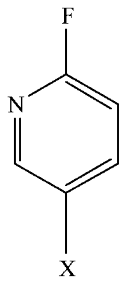 , or 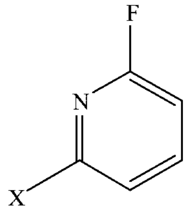 ;

when n = 2,

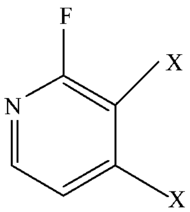 , 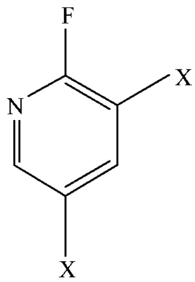 , 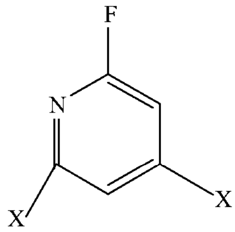 , 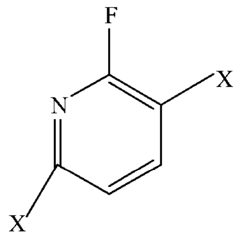 ,

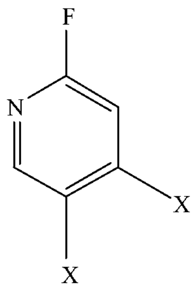 , or 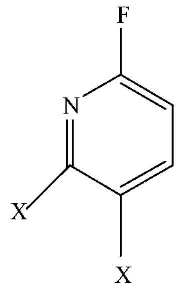 ;

when n = 3

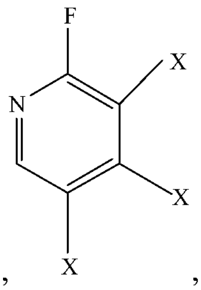 , 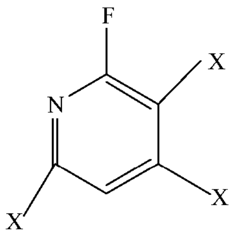 , 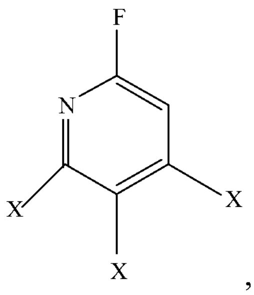 , or 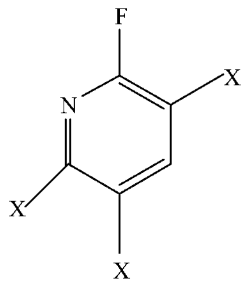 ;

when n = 4,

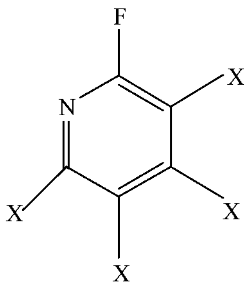 .

X may be selected from hydrogen, halogen, a substituted or unsubstituted C1-C10 alkyl group, a substituted or unsubstituted C2-C10 alkenyl group, a substituted or unsubstituted C2-C10 alkynyl group, or a C1-C4 cyano group, and n is 1, 2, 3, or 4. The substituent is selected from one or more of F, Cl, Br, or I.

The C2-C10 alkynyl group is, for example, selected from ethynyl, propynyl, 2-propynyl, n-butynyl, isobutynyl, sec-butynyl, tert-butynyl, cyclobutynyl, n-pentynyl, isopentynyl, tert-pentynyl, neopentynyl, cyclopentynyl, 2,2-dimethylpropynyl, 1-ethylpropynyl, 1-methylbutynyl, 2-methylbutynyl, n-hexynyl, isohexynyl, 2-hexynyl, 3-hexynyl, 2-methylpentynyl, 3-methylpentynyl, 1,1,2-trimethylpropynyl, 3,3-dimethylbutynyl, n-heptynyl, 2-heptynyl, 3-heptynyl, 2-methylhexynyl, 3-methylhexynyl, 4-methylhexynyl, isoheptynyl, cycloheptynyl, n-octynyl, cyclooctynyl, nonynyl, or decynyl.

The C1-C4 cyano group is, for example, selected from methylcyano, ethylcyano, propylcyano, or butylcyano.

In an example, X is selected from hydrogen, halogen, a substituted or unsubstituted C1-C5 alkyl group, a substituted or unsubstituted C2-C5 alkenyl group, a substituted or unsubstituted C2-C5 alkynyl group, or a C1-C4 cyano group, and n is 1, 2, or 3. The substituent is selected from F.

In an example, the second additive includes one or more of the following structures:

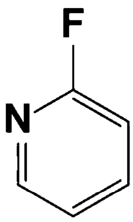 (II-1), 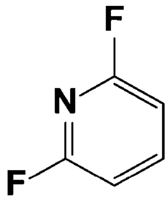 (II-2), 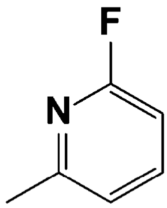 (II-3), 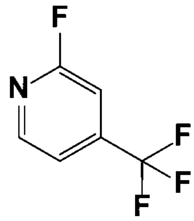 (II-4),

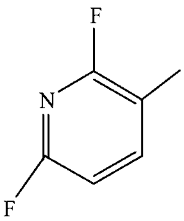 (II-5), 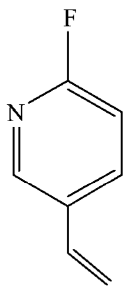 (II-6), 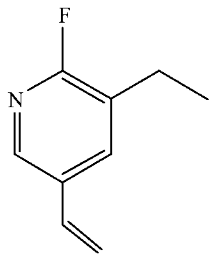 (II-7), 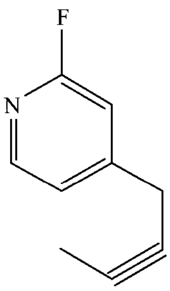 (II-8), 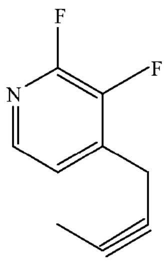

(II-9), or 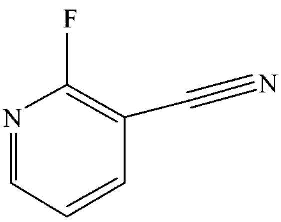 (II-10).

According to a specific implementation, a weight ratio of the first additive to the second additive is (0.01-100):1 (for example, 0.01:1, 0.05:1, 0.1:1, 0.5:1, 1:1, 5:1, 10:1, 20:1, 30:1, 40:1, 50:1, 60:1, 70:1, 80:1, 90:1, or 100:1). When the weight ratio of the first additive to the second additive is less than 0.01:1, an amount of the first additive is too low, resulting in that interface protection ability is significantly insufficient, and storage performance significantly deteriorates. When the weight ratio of the first additive to the second additive is greater than 100:1, an amount of the second additive is too low, resulting in that advantages under an extreme condition will disappear, thermal shock performance will significantly deteriorates, interface protection ability will also weaken, and both cycling performance and storage performance will be deteriorated.

In an example, the weight ratio of the first additive to the second additive is (0.5-8):1. In this case, an effect of the combined additives can be better balanced, and cycling storage and safety performance can be better taken into account.

According to a specific implementation, using a total weight of the electrolyte solution as a reference, a content of the first additive ranges from 0.2 wt% to 10 wt% (for example, is 0.2 wt%, 0.5 wt%, 1 wt%, 2 wt%, 3 wt%, 4 wt%, 5 wt%, 6 wt%, 7 wt%, 8 wt%, 9 wt%, or 10 wt%). When the content of the first additive in the electrolyte solution is less than 0.2 wt%, an amount of the first additive is too low, the first additive cannot play its function, and performance of the electrolyte solution and the battery cannot be improved; when the content of the first additive in the electrolyte solution is greater than

10 wt%, impedance of the electrolyte solution will increase, affecting electrical performance of the battery.

In an example, using the total weight of the electrolyte solution as a reference, the content of the first additive ranges from 1 wt% to 4 wt% (for example, is 1 wt%, 1.5 wt%, 2 wt%, 2.5 wt%, 3 wt%, 3.5 wt%, or 4 wt%).

According to a specific implementation, using the total weight of the electrolyte solution as a reference, a content of the second additive ranges from 0.1 wt% to 5 wt% (for example, is 0.1 wt%, 0.5 wt%, 1 wt%, 1.5 wt%, 2 wt%, 2.5 wt%, 3 wt%, 3.5 wt%, 4 wt%, 4.5 wt%, or 5 wt%). The content of the second additive in the electrolyte solution being less than 0.1 wt% causes a serious lack of protection at a positive electrode interface, deteriorating storage performance and cycling performance. The content of the second additive in the electrolyte solution being greater than 5 wt% causes an excess of the second additive and excessive interface polarization, resulting in an excessively high overpotential on a positive electrode side, and significantly deteriorating high-temperature cycling performance.

In an example, using the total weight of the electrolyte solution as a reference, the content of the second additive ranges from 0.5 wt% to 2 wt% (for example, is 0.5 wt%, 1 wt%, 1.5 wt%, or 2 wt%).

According to a specific implementation, the electrolyte solution includes a third additive, which includes one or more of fluoroethylene carbonate (FEC), vinylene carbonate (VC), 1,3-propane sultone (PS), ethylene sulfate (DTD), methylene methane disulfonate (MMDS), prop-1-ene-1,3-sultone (PST), maleic anhydride, diglycolic anhydride, succinic anhydride, succinonitrile (SN), adiponitrile (ADN), ethylene glycol bis(propionitrile) ether (EGBE), or hexane tricarbonitrile (HTCN).

In an example, using the total weight of the electrolyte solution as a reference, a content of the third additive ranges from 0.1 wt% to 15 wt% (for example, is 0.1 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, or 15 wt%).

According to a specific implementation, the electrolyte solution includes an organic solvent and a lithium salt.

In an example, the lithium salt includes one or more of lithium hexafluorophosphate ($LiPF_6$), lithium difluorophosphate ($LiPF_2O_2$), lithium difluorobis(oxalato)phosphate ($LiPF_2(C_2O_4)_2$), lithium tetrafluoro(oxalato)phosphate ($LiPF_4C_2O_4$), lithium oxalate phosphate ($LiPO_2C_2O_4$), lithium bisoxalate borate (LiBOB), lithium difluoro(oxalato)borate (LiODFB), lithium tetrafluoroborate ($LiBF_4$), lithium bis(trifluorosulfonyl)imide (LiTFSI), or lithium bis(fluorosulfonyl)imide (LiFSI).

In an example, using the total weight of the electrolyte solution as a basis, a content of the lithium salt ranges from 10 wt% to 20 wt% (for example, is 10 wt%, 10.5 wt%, 11 wt%, 11.5 wt%, 12 wt%, 12.5 wt%, 13 wt%, 13.5 wt%, 14 wt%, 14.5 wt%, 15 wt%, 15.5 wt%, 16 wt%, 16.5 wt%, 17 wt%, 17.5 wt%, 18 wt%, 18.5 wt%, 19 wt%, 19.5 wt%, or 20 wt%). When the content of the lithium salt in the electrolyte solution is less than 10 wt% the content of the lithium ion is too low, resulting in slow migration of lithium ions. When the content of the lithium salt in the electrolyte solution is greater than 20 wt% the content of the lithium salt is too high, and decomposition of the lithium salt results in high HF, thus significantly deteriorating the cycling performance and the storage performance.

In an example, using the total weight of the electrolyte solution as a reference, the content of the lithium salt ranges from 10 wt% to 15 wt%.

According to a specific implementation, the organic solvent includes one or more of ethylene carbonate (EC), propylene carbonate (PC), diethyl carbonate (DEC), ethyl propionate (EP), propyl propionate (PP), ethyl acetate (EA), ethyl butyrate (EB), or $\gamma$-butyrolactone (GBL).

In an example, using the total weight of the electrolyte solution as a reference, a content of the organic solvent ranges from 55 wt% to 85 wt% (for example, is 55 wt%, 60 wt%, 65 wt%, 70 wt%, 75 wt%, 80 wt%, or 85 wt%).

Except for the electrolyte solution, all materials of the battery may be prepared and a preparation method of the battery may be carried out in a manner known in the field, all of which can achieve low impedance, good long-time cycling stability, and high safety.

The battery is preferably a lithium-ion battery.

In an example, the battery includes a positive electrode plate, a negative electrode plate, the electrolyte solution, and a separator located between the positive electrode plate and the negative electrode plate.

In an example, the positive electrode plate of the battery includes a positive electrode current collector and a positive electrode active material layer located on one or two side surfaces of the positive electrode current collector, the positive electrode active material layer including a positive electrode active material, and the positive electrode active material includes one or more of a transition metal oxide, lithium iron phosphate, or a lithium-rich manganese-based material.

In an example, the negative electrode plate of the battery includes a negative electrode current collector and a negative electrode active material layer located on one or two side surfaces of the negative electrode current collector, the negative electrode active material layer including a negative electrode active material, and the negative electrode active material includes a silicon-based material and/or a carbon-based material, for example, artificial graphite, natural graphite, mesocarbon microbead, hard carbon, soft carbon, nano silicon, a silicon oxide material, or a silicon-carbon material.

Because the battery of the present disclosure contains the electrolyte solution described in the present disclosure, impedance of the battery is reduced, and long-time cycling stability and safety performance are improved.

The following describes the present disclosure in detail by using embodiments. The embodiments described in the present disclosure are merely some, but not all of the embodiments of the present disclosure. All other embodiments obtained by a person of ordinary skill in the art based on embodiments of the present disclosure without creative efforts fall within the protection scope of the present disclosure.
The following examples are used to illustrate the electrolyte solution of the present disclosure.

Example 1

(1) Component Preparation
A first additive: 3 parts by weight for the structure represented by Formula I-1;

a second additive: 0.5 parts by weight for the structure represented by Formula II-1;
a third additive: 8 parts by weight of fluoroethylene carbonate (FEC), and 2 parts by weight of hexane tricarbonitrile (HTCN);
a lithium salt: 13.75 parts by weight of lithium hexafluorophosphate ($LiPF_6$); and
organic solvents: 10.4 parts by weight of ethylene carbonate (EC), 20.8 parts by weight of propylene carbonate (PC), and 41.55 parts by weight of diethyl carbonate (DEC).

(2) Preparation of an electrolyte solution

In a glovebox filled with inert gas ($H_2O$ < 10 ppm, $O_2$ < 5 ppm), the organic solvents were mixed, and then the mixed solution was slowly added to the lithium salt. After dissolution, the first additive, the second additive, and the third additive were added into the dissolved solution, and the mixture was stirred evenly. A required electrolyte solution was obtained after moisture and free acid were tested to be qualified.

Group of Examples 2

This example group is used to illustrate an impact of changing the selection of the first additive.
For this examples group, reference was made to Example 1. A difference lies in that the selection of the first additive was changed, and details are shown in Table 1.

Group of Examples 3

This example group is used to illustrate an impact of changing the selection of the second additive.
For this example group, reference was made to Example 1. A difference lies in that the selection of the second additive was changed, and details are shown in Table 1.

Group of Examples 4

This example group is used to illustrate an impact of changing the amount of the first additive.
For this example group, reference was made to Example 1. A difference lies in that the amount of the first additive was changed, and details are shown in Table 1.

Group of Examples 5

This example group is used to illustrate an impact of changing the amount of the second additive.
For this example group, reference was made to Example 1. A difference lies in that the amount of the first additive was changed, and details are shown in Table 1.

Group of Examples 6

This example group is used to illustrate an impact of changing the weight ratio of the first additive to the second additive.
For this example group, reference was made to Example 1. A difference lies in that the weight ratio of the first additive to the second additive was changed, and details are shown in Table 1.

Group of Examples 7

This example group is used to illustrate an impact of changing the specific selection and amount of the first additive.

For this example group, reference was made to Example 1. A difference lies in that the specific selection and amount of the first additive were changed, and details are shown in Table 1.

Group of Examples 8

This example group is used to illustrate an impact of changing the specific selection and amount of the second additive.

For this example group, reference was made to Example 1. A difference lies in that the specific selection and amount of the second additive were changed, and details are shown in Table 1.

Comparative Example 1

For Comparative Example 1, reference was made to Example 1. A difference lies in that the first additive and the second additive were replaced with same weight of organic solvents, and details are shown in Table 1.

Comparative Example 2

For Comparative Example 2, reference was made to Example 1. A difference lies in that the second additive was replaced with a same weight of organic solvent, and details are shown in Table 1.

Comparative Example 3

For Comparative Example 2, reference was made to Example 1. A difference lies in that the first additive was replaced with a same weight of organic solvent, and details are shown in Table 1.

Table 1

| | First additive, parts by weight | Second additive, parts by weight | Weight ratio of the first additive to the second additive |
|---|---|---|---|
| Example 1 | (I-1), 3 | (II-1), 0.5 | 6:1 |
| Example 2a | (I-2), 3 | Same as that in Example 1 | 6:1 |
| Example 2b | (I-3), 3 | Same as that in Example 1 | 6:1 |
| Example 2c | (I-4), 3 | Same as that in Example 1 | 6:1 |
| Example 2d | (I-5), 3 | Same as that in Example 1 | 6:1 |
| Example 2e | (I-6), 3 | Same as that in Example 1 | 6:1 |
| Example 3a | Same as that in Example 1 | (II-2), 0.5 | 6:1 |
| Example 3b | Same as that in Example 1 | (II-3), 0.5 | 6:1 |
| Example 3c | Same as that in Example 1 | (II-4), 0.5 | 6:1 |
| Example 4a | (I-1), 1 | Same as that in Example 1 | 2:1 |
| Example 4b | (I-1), 8 | Same as that in Example 1 | 16:1 |
| Example 4c | (I-1), 4 | Same as that in Example 1 | 8:1 |
| Example 5a | Same as that in Example 1 | (II-1), 1 | 3:1 |
| Example 5b | Same as that in Example 1 | (II-1), 2 | 1.5:1 |
| Example 5c | Same as that in Example 1 | (II-1), 0.1 | 30:1 |
| Example 6a | (I-1), 0.5 | (II-1), 5 | 0.1:1 |
| Example 6b | (I-1), 1 | (II-1), 2 | 0.5:1 |

(continued)

| | First additive, parts by weight | Second additive, parts by weight | Weight ratio of the first additive to the second additive |
|---|---|---|---|
| Example 7a | (I-2), 6 | Same as that in Example 1 | 12:1 |
| Example 7b | (1-3), 0.2 | Same as that in Example 1 | 0.4:1 |
| Example 7c | (1-4), 0.1 | Same as that in Example 1 | 0.2:1 |
| Example 7d | (I-5), 10 | Same as that in Example 1 | 20:1 |
| Example 7e | (I-6), 12 | Same as that in Example 1 | 24:1 |
| Example 8a | Same as that in Example 1 | (II-2), 6 | 0.5:1 |
| Example 8b | Same as that in Example 1 | (II-3), 0.25 | 12:1 |
| Example 8c | Same as that in Example 1 | (II-4), 4 | 0.75:1 |
| Comparative Example 1 | | | |
| Comparative Example 2 | Same as that in Example 1 | - | - |
| Comparative Example 3 | - | Same as that in Example 1 | - |
| - indicates non-existent. | | | |

Preparation Example

The electrolyte solutions obtained from the examples and comparative examples were separately used to prepare a battery in the following manner:

(1) Preparation of a positive electrode plate

A positive electrode active material lithium cobalt oxide (LCO), a binder polyvinylidene fluoride (PVDF), conductive carbon black, and single-walled carbon nanotube were mixed in a weight ratio of 97.2:1.5:1.2:0.1, and N-methylpyrrolidone (NMP) was added. The mixture was stirred by using a vacuum mixer until a mixed system became a positive electrode slurry with uniform fluidity. The positive electrode slurry was evenly applied on a current collector aluminum foil. The coated aluminum foil was baked in a five-stage oven with different temperatures and then dried in an oven at 120°C for 8 hours, followed by rolling and cutting, to obtain the required positive electrode plate.

(2) Preparation of a negative electrode plate

A specific proportion of a negative electrode active material graphite, a thickener sodium carboxymethyl cellulose (CMC-Na), a binder styrene-butadiene rubber, and a conductive agent acetylene black were mixed in a weight ratio of 97:1:1:1, and added into deionized water. The negative electrode slurry was obtained by using a vacuum mixer. The negative electrode slurry was evenly applied on carbon-coated copper foil with high strength to obtain an electrode plate. The obtained electrode plate was dried at room temperature and then transferred to an oven at 80°C for 10 hours, followed by roller pressing and cutting, to obtain the negative electrode plate.

(3) Electrolyte solution

The electrolyte solutions obtained from the foregoing examples and comparative examples were used.

(4) Preparation of a battery

The positive electrode plate from step (1), a separator (a PP film with thickness of 9 μm), and the negative electrode plate from step (2) were sequentially stacked, to ensure that the separator was placed between the positive and negative electrode plates for isolation. A bare cell was placed in an aluminum-plastic film outer packaging, and the electrolyte solution from step (3) was injected into the dried battery. After processes of packaging, standing, formation, shaping, and capacity grading, the preparation of pouch lithium-ion battery was completed.

Test Example

The batteries obtained from the examples and comparative examples each were tested as follows:

(1) High-temperature cycling performance test

At 45°C, the battery after capacity grading was charged to 4.48V at a constant current of 0.7C and a constant voltage, with a cutoff current of 0.05C, and then discharged to 3.0V at a constant current of 0.5C. This cycling was repeated, and after 500 charge and discharge cycles, a capacity retention rate at the $500^{th}$ cycle was calculated. The calculation formula is as follows:

Capacity retention rate at the $500^{th}$ cycle (%) = (Discharge capacity at the $500^{th}$ cycle/Discharge capacity at the first circle)* 100%.

(2) Room temperature cycling performance test

At 25°C, the battery after capacity grading was charged at a constant current of 0.7C and a constant voltage to 4.48 V, with a cutoff current of 0.05C, and then discharged with a constant current of 0.5C to 3.0 V. This cycling was repeated, and after 500 charge and discharge cycles, a capacity retention rate at the $500^{th}$ cycle is calculated using the following formula:

Capacity retention rate at the $500^{th}$ cycle (%) = (Discharge capacity at the $500^{th}$ cycle/Discharge capacity at the first circle)* 100%.

(3) DCR (Direct Current Resistance) test after 300 cycles

After 300 cycles, at room temperature (23°C$\pm$3°C), the battery was charged with a constant current of 0.5C and a constant voltage to 4.45 V, with a cutoff current of 0.02C, then discharged at 0.1C for 9 hours (adjusted to 10% SOC), next discharged at 0.1C for 10 seconds, recording a final voltage $V_1$, and discharged at 1C for 1 second, recording a final voltage $V_2$.

$$\text{DCR formula: DCR} = (V_1 - V_2)/(1C - 0.1C).$$

(4) Thermal shock performance test

In an environmental condition of 25°C, the battery was discharged at a given current of 0.2C to 3.0V; left aside for 5 minutes; and then was charged at a charging current of 0.2C to 4.48 V. When a cell voltage reached 4.48 V, the battery was charged at a constant voltage at 4.48 V until the charging current was less than or equal to a given cutoff current of 0.05C; left aside for 1 hour, then the cell was placed in an oven. An oven temperature was increased at a rate of 5$\pm$2°C/min to 135$\pm$2°C, and maintained for 30 minutes before stopping. If a cell does not catch fire or explode, it is considered "pass". For each example and comparative example, six cell samples in total is tested., And a test result is expressed as "number of passed/6pass". For example, a test result of "6/6pass" means that the test was passed 6 times out of 6; and a test result of "0/6pass" means that the test was passed 0 times out of 6.

The obtained results were recorded in Table 2.

Table 2

| | Thermal shock performance | | Capacity retention rate after 500 cycles at room temperature/% | Capacity retention rate after 500 cycles at high temperature of 45°C/% | DCR after 300 cycles/mΩ |
|---|---|---|---|---|---|
| | 132°C | 135°C | | | |
| Example 1 | 6/6pass | 6/6pass | 85.87 | 76.14 | 102 |
| Example 2a | 6/6pass | 6/6pass | 85.32 | 76.63 | 105 |
| Example 2b | 6/6pass | 6/6pass | 85.67 | 76.81 | 107 |
| Example 2c | 6/6pass | 6/6pass | 85.83 | 76.36 | 101 |

(continued)

| | Thermal shock performance | | Capacity retention rate after 500 cycles at room temperature/% | Capacity retention rate after 500 cycles at high temperature of 45°C/% | DCR after 300 cycles/mΩ |
|---|---|---|---|---|---|
| | 132°C | 135°C | | | |
| Example 2d | 6/6pass | 6/6pass | 85.07 | 76.08 | 109 |
| Example 2e | 6/6pass | 6/6pass | 85.11 | 76.14 | 110 |
| Example 3a | 6/6pass | 6/6pass | 85.67 | 75.98 | 101 |
| Example 3b | 6/6pass | 6/6pass | 85.48 | 75.63 | 104 |
| Example 3c | 6/6pass | 6/6pass | 85.82 | 76.36 | 102 |
| Example 4a | 6/6pass | 6/6pass | 85.09 | 76.39 | 106 |
| Example 4b | 6/6pass | 6/6pass | 82.09 | 69.26 | 135 |
| Example 4c | 6/6pass | 6/6pass | 85.48 | 76.06 | 103 |
| Example 5a | 6/6pass | 6/6pass | 84.79 | 77.34 | 100 |
| Example 5b | 6/6pass | 6/6pass | 85.96 | 77.11 | 97 |
| Example 5c | 6/6pass | 6/6pass | 83.53 | 73.29 | 128 |
| Example 6a | 6/6pass | 6/6pass | 83.97 | 75.02 | 112 |
| Example 6b | 6/6pass | 6/6pass | 85.23 | 75.84 | 98 |
| Example 7a | 6/6pass | 6/6pass | 83.92 | 72.06 | 115 |
| Example 7b | 6/6pass | 6/6pass | 84.15 | 73.14 | 118 |
| Example 7c | 6/6pass | 6/6pass | 82.33 | 72.84 | 121 |
| Example 7d | 6/6pass | 6/6pass | 81.53 | 69.04 | 136 |
| Example 7e | 6/6pass | 6/6pass | 81.02 | 68.12 | 136 |
| Example 8a | 6/6pass | 6/6pass | 83.16 | 74.56 | 130 |
| Example 8b | 6/6pass | 6/6pass | 84.13 | 75.02 | 115 |
| Example 8c | 6/6pass | 6/6pass | 85.46 | 75.12 | 105 |
| Comparative Example 1 | 0/6pass | 0/6pass | 52.76 | 41.51 | 245 |
| Comparative Example 2 | 6/6pass | 0/6pass | 80.65 | 66.69 | 142 |
| Comparative Example 3 | 6/6pass | 0/6pass | 78.81 | 65.32 | 155 |

As can be seen from Table 2, it may be learned from the examples and comparative examples that, a battery prepared with an electrolyte solution from an example has reduced impedance and improved long-time cycling stability and safety. This indicates that introduction of a specific composition of the present disclosure improves stability of an interface film and an ionic conductivity, thereby reducing impedance of the battery and improving long-time cycling stability and safety of the battery.

The foregoing describes in detail preferred embodiments of the present disclosure, but the present disclosure is not limited thereto. Within the scope of the technical concepts of the present disclosure, various simple variations can be made to the technical solutions of the present disclosure, including combining various technical features in any other suitable manner. These simple variations and combinations shall also be considered as part of the content disclosed by the present disclosure and fall within the scope of protection of the present disclosure.

## Claims

1. An electrolyte solution, comprising a first additive having a structure represented by formula (I) and a second additive having a structure represented by formula (II),

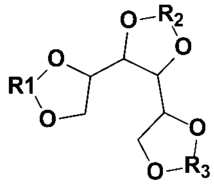 (I), 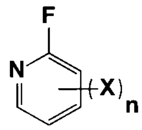 (II),

wherein $R_1$, $R_2$, and $R_3$ each are independently selected from

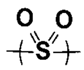, 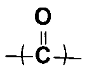, 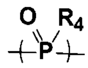,

or

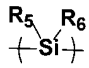;

and $R_4$, $R_5$, and $R_6$ each are independently selected from a substituted or unsubstituted C1-C10 alkyl group, a substituted or unsubstituted C2-C10 alkenyl group, or a substituted or unsubstituted C1-C10 alkoxy group;
X is selected from hydrogen, halogen, a substituted or unsubstituted C1-C10 alkyl group, a substituted or unsubstituted C2-C10 alkenyl group, a substituted or unsubstituted C2-C10 alkynyl group, or a C1-C4 cyano group, and n is 1, 2, 3, or 4; and
the substituent is selected from one or more of F, Cl, Br, or I.

**2.** The electrolyte solution according to claim 1, wherein $R_1$, $R_2$, and $R_3$ each are independently selected from

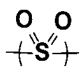, 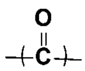, 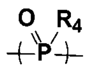, or 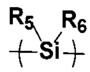;

and $R_4$, $R_5$, and $R_6$ each are independently selected from a substituted or unsubstituted C1-C5 alkyl group, a substituted or unsubstituted C2-C5 alkenyl group, or a substituted or unsubstituted C1-C5 alkoxy group;

X is selected from hydrogen, halogen, a substituted or unsubstituted C1-C5 alkyl group, a substituted or unsubstituted C2-C5 alkenyl group, a substituted or unsubstituted C2-C5 alkynyl group, or a C1-C4 cyano group, and n is 1, 2, or 3; and
the substituent is F.

**3.** The electrolyte solution according to claim 1 or 2, wherein at least one of $R_1$, $R_2$, and $R_3$ is selected from

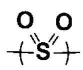.

**4.** The electrolyte solution according to any one of claims 1 to 3, wherein a weight ratio of the first additive to the second additive is (0.01-100):1.

**5.** The electrolyte solution according to any one of claims 1 to 4, wherein a weight ratio of the first additive to the second additive is (0.5-8):1.

**6.** The electrolyte solution according to claim 1, wherein the first additive comprises one or more of following structures:

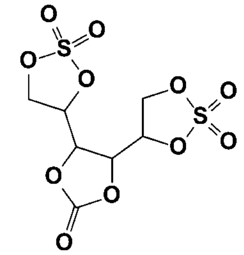 (I-1), 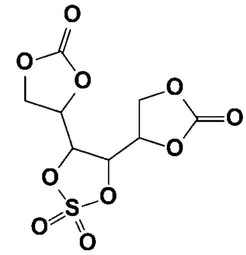 (I-2),

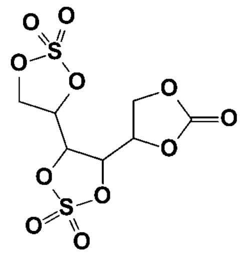 (I-3), 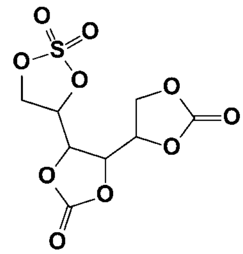 (I-4), 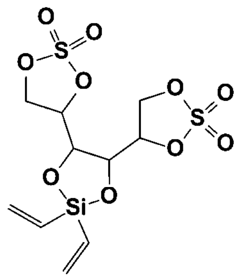 (I-5),

or

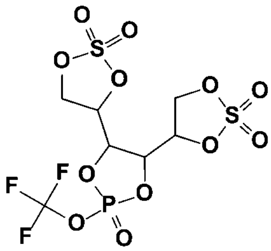 (I-6);

and/or the second additive comprises one or more of following structures:

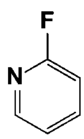 (II-1),

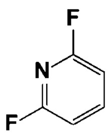 (II-2), 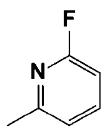 (II-3), 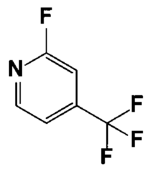 (II-4), 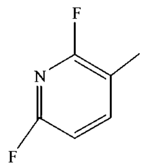 (II-5), 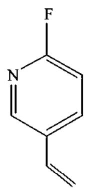 (II-6),

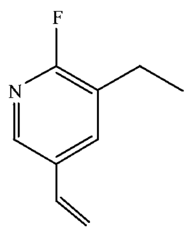 (II-7), 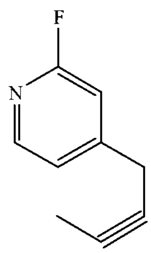 (II-8), 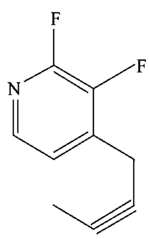 (II-9), or 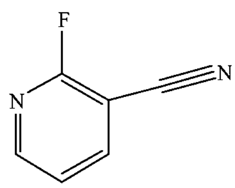 (II-10).

7. The electrolyte solution according to any one of claims 1 to 6, wherein using a total weight of the electrolyte solution as a reference, a content of the first additive ranges from 0.2 wt% to 10 wt%, and a content of the second additive ranges from 0.1 wt% to 5 wt%.

8. The electrolyte solution according to any one of claims 1 to 7, wherein using a total weight of the electrolyte solution as a reference, a content of the first additive ranges from 1 wt% to 4 wt%, and a content of the second additive ranges from 0.5 wt% to 2 wt%.

9. The electrolyte solution according to any one of claims 1 to 8, wherein the electrolyte solution comprises a third additive, and the third additive comprises one or more of fluoroethylene carbonate, vinylene carbonate, 1,3-propane sultone, ethylene sulfate, methylene methane disulfonate, prop-1-ene-1,3-sultone, maleic anhydride, diglycolic anhydride, succinic anhydride, succinonitrile, adiponitrile, ethylene glycol bis(propionitrile) ether, or hexane tricarbonitrile.

10. The electrolyte solution according to claim 9, wherein using a total weight of the electrolyte solution as a reference, a content of the third additive ranges from 0.1 wt% to 15 wt%.

11. A battery, wherein the battery comprises the electrolyte solution according to any one of claims 1 to 10.

12. The battery according to claim 11, wherein the battery comprises a positive electrode plate, a negative electrode plate, an electrolyte solution, and a separator between the positive electrode plate and the negative electrode plate; and/or

the positive electrode plate of the battery comprises a positive electrode current collector and a positive electrode active material layer that is disposed on one or two side surfaces of the positive electrode current collector, the positive electrode active material layer comprises a positive electrode active material, and the positive electrode active material comprises one or more of a transition metal oxide, lithium iron phosphate, or a lithium-rich manganese-based material; and/or
the negative electrode plate of the battery comprises a negative electrode current collector and a negative electrode active material layer that is disposed on one or two side surfaces of the negative electrode current collector, the negative electrode active material layer comprises a negative electrode active material, and the negative electrode active material comprises a silicon-based material and/or a carbon-based material.

## INTERNATIONAL SEARCH REPORT

International application No.
**PCT/CN2024/070165**

**A. CLASSIFICATION OF SUBJECT MATTER**

H01M10/0567(2010.01)i; H01M10/0569(2010.01)i; H01M10/0525(2010.01)i; H01M10/42(2006.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 添加剂, 电解液, 锂电池, 硫酸酯, 碳酸酯, 磷酸酯, 硅酸酯, 羧酸酯, 吡啶, 氟, 电解质膜, SEI, additive, electrolyte, sulfate ester, phosphate ester, silicic acid ester, carboxylic acid ester, pyridine, fluorine, electrolyte membrane

**C. DOCUMENTS CONSIDERED TO BE RELEVANT**

| Category* | Citation of document, with indication, where appropriate, of the relevant passages | Relevant to claim No. |
|---|---|---|
| Y | CN 114552004 A (SHENZHEN CAPCHEM TECHNOLOGY CO., LTD.) 27 May 2022 (2022-05-27)<br>description, paragraphs [0004]-[0181] | 1-12 |
| Y | CN 114695867 A (SHENZHEN CAPCHEM TECHNOLOGY CO., LTD.) 01 July 2022 (2022-07-01)<br>description, paragraphs [0003]-[0172] | 1-12 |
| Y | CN 111313091 A (NINGDE AMPEREX TECHNOLOGY LTD.) 19 June 2020 (2020-06-19)<br>description, paragraphs [0026]-[0129] | 1-12 |
| Y | CN 107658503 A (SOUTH CHINA NORMAL UNIVERSITY) 02 February 2018 (2018-02-02)<br>description, paragraphs [0004]-[0061] | 1-12 |
| A | CN 114824477 A (ZHUHAI COSMX BATTERY CO., LTD.) 29 July 2022 (2022-07-29)<br>entire document | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 March 2024** | **31 March 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No. **PCT/CN2024/070165**

**C. DOCUMENTS CONSIDERED TO BE RELEVANT**

| Category* | Citation of document, with indication, where appropriate, of the relevant passages | Relevant to claim No. |
|---|---|---|
| A | CN 115528307 A (ZHUHAI COSMX BATTERY CO., LTD.) 27 December 2022 (2022-12-27)<br>entire document | 1-12 |

Form PCT/ISA/210 (second sheet) (July 2022)

**INTERNATIONAL SEARCH REPORT**
**Information on patent family members**

International application No.
**PCT/CN2024/070165**

| Patent document cited in search report | Publication date (day/month/year) | Patent family member(s) | Publication date (day/month/year) |
|---|---|---|---|
| CN 114552004 A | 27 May 2022 | WO 2023138244 A1 | 27 July 2023 |
| CN 114695867 A | 01 July 2022 | None | |
| CN 111313091 A | 19 June 2020 | CN 111313091 B | 06 August 2021 |
| CN 107658503 A | 02 February 2018 | None | |
| CN 114824477 A | 29 July 2022 | None | |
| CN 115528307 A | 27 December 2022 | None | |

Form PCT/ISA/210 (patent family annex) (July 2022)